(19)

Europäisches
Patentamt
European
Patent Office
Office européen
des brevets

(11) **EP 1 763 068 A1**

(12) **EUROPEAN PATENT APPLICATION**
published in accordance with Art. 158(3) EPC

(43) Date of publication:
 **14.03.2007 Bulletin 2007/11**

(21) Application number: **05765397.4**

(22) Date of filing: **28.06.2005**

(51) Int Cl.:
 *H01J 61/88* (2006.01)     *F21S 8/10* (2006.01)

(86) International application number:
 **PCT/JP2005/011846**

(87) International publication number:
 **WO 2006/003895 (12.01.2006 Gazette 2006/02)**

(84) Designated Contracting States:
 **AT BE BG CH CY CZ DE DK EE ES FI FR GB GR HU IE IS IT LI LT LU MC NL PL PT RO SE SI SK TR**
 Designated Extension States:
 **AL BA HR LV MK YU**

(30) Priority: **30.06.2004 JP 2004193064**

(71) Applicants:
 • **Harison Toshiba Lighting Corp.**
 **Imabari-shi,**
 **Ehime 794-8510 (JP)**
 • **TOSHIBA LIGHTING & TECHNOLOGY CORPORATION**
 **Shinagawa-ku,**
 **Tokyo 140-8640 (JP)**

(72) Inventors:
 • **UEMURA, Kozo;**
 **c/o Harison Toshiba Lighting Corp.**
 **Imabari-shi, Ehime 7948510 (JP)**
 • **NAKAZATO, Keisuke;**
 **c/o Harison Toshiba Light.Corp.**
 **Imabari-shi, Ehime 7948510 (JP)**
 • **KAWASHIMA, Hiromichi;**
 **c/o Harison Toshiba L.Corp.**
 **Imabari-shi, Ehime 7948510 (JP)**

(74) Representative: **Cheyne, John Robert Alexander M.**
 **HASELTINE LAKE,**
 **Redcliff Quay**
 **120 Redcliff Street**
 **Bristol BS1 6HU (GB)**

(54) **METAL HALIDE LAMP, LIGHTING DEVICE FOR METAL HALIDE LAMP AND HEADLIGHT**

(57)    There are provided a mercury-free metal halide lamp which suppresses occurrence of flickering of light emission, and is improved in light flux rising immediately after starting, and more practical and suitable for a headlight, and a metal halide lamp lighting device and a headlight using this.

A metal halide lamp according to the present invention comprises: a translucent air-tight container having an inner volume which is not greater than 0.1 cc; a pair of electrodes sealed facing each other with an inter-electrode distance which is not greater than 5 mm in the translucent air-tight container; and a discharging medium containing a plurality of metal halogen compounds selected from a group of scandium (Sc), sodium (Na), indium (In), zinc (Zn) and a rare-earth metal and a rare gas but intrinsically not containing mercury (Hg), wherein a tube wall load is not smaller than 60 W/cm$^2$, and a ratio Vo/Vl satisfies an expression $0.45 \leq Vo/Vl \leq 0.72$, where Vo is an average lamp voltage for 0.3 to 2 seconds after starting, and Vl is an average lamp voltage in a stable state.

*FIG. 1*

## Description

Technical Field

The present invention relates to a mercury-free metal halide lamp, a metal halide lamp lighting device and a headlight using this.

Background of the Invention

A so-called mercury-free metal halide lamp (which will be referred to as a "mercury-free lamp" hereinafter for the convenience's sake) in which mercury is not essentially enclosed has been already known (see, e.g., Patent Literature 1). In the mercury-free lamp, generally, metal halogen compounds such as zinc (Zn) which have a relatively high steam pressure and hardly emit light in a visible range are enclosed in place of mercury enclosed as a conventional lamp voltage forming buffer substance.

In particular, the mercury-free lamp has been expected and developed as a headlight metal halide lamp of a car from which use of environment burden materials is to be completely abolished. In case of this metal halide lamp, a light flux which is 80% of a rated light flux must be generated after 4 seconds from starting based on standards (see Non-Patent Literature 1). Several proposals have been conventionally provided to meet the above-described conditions. For example, there is a proposal characterized in that an inner volume and a wall thickness of an arc tube and a pressure of an Xe gas are selected to fall within predetermined ranges and a metal halogen compound having a low fusing point is enclosed (see Patent Literature 2). Furthermore, there is another proposal to select an internal diameter of an arc tube, a protruding length of an electrode, a wall thickness, an input power, an Xe enclosing pressure and others to fall within predetermined ranges (see Patent Literature 3). Moreover, there is still another proposal of improving initial rising of a light flux based on a relationship between an internal diameter of an arc tube and a diameter of an arc (see Patent Literature 4).

Patent Literature 1: Japanese Patent Application Laid-open No. 1999-238488
Non-Patent Literature 1: Japan Electric Lamp Manufactures Association Standards JEL 215 "Automobile Headlight HID Light Source"
Patent Literature 2: Japanese Patent Application Laid-open No. 2001-006610
Patent Literature 3: Japanese Patent Application Laid-open No. 2001-313001
Patent Literature 4: Japanese Patent Application Laid-open No. 2003-187742

Disclosure of the Invention

Problem to be Solved by the Invention

In studies of a mercury-free metal halide lamp, the present inventor has discovered that a ratio Vo/Vl of an average lamp voltage Vo immediately after starting and a lamp voltage Vl in a stable state greatly affects flickering of light emission in the mercury-free metal halide lamp, especially a metal halide lamp for an automobile. The present invention is accomplished based on this knowledge.

It is an object of the present invention to provide a mercury-free metal halide lamp which is controlled in occurrence of light emission flickering, improved in light flux rising immediately after starting, and more practical, especially suitable for a headlight, and a metal halide lamp lighting device and a head light using this.

Means for Solving the Problem

In order to achieve this object, the present invention is configured in such a manner that a ratio Vo/Vl of an average lamp voltage Vo immediately after starting, i.e., in 0.3 to 1.2 seconds after starting with respect to a lamp voltage Vl in a stable state falls within a predetermined range. That is, the following configuration is provided.

According to the present invention, there is provided a metal halide lamp comprising: a translucent air-tight container having an inner volume which is not greater than 0.1 cc; a pair of electrodes sealed facing each other with an inter-electrode distance which is not greater than 5 mm in the translucent air-tight container; and a discharging medium containing a plurality of metal halogen compounds selected from a group of scandium (Sc), sodium (Na), indium (In), zinc (Zn) and a rare-earth metal and a rare gas but intrinsically not containing mercury (Hg), wherein a tube wall load is not smaller than 60 W/cm$^2$, Vo/Vl satisfies the following expression:

$$0.45 \leq \text{Vo/Vl} \leq 0.72$$

where Vo is an average lamp voltage for 0.3 to 1.2 seconds after starting, and Vl is an average lamp voltage at stabilizing.

According to the present invention, there is provided a metal halide lamp lighting device comprising: a metal halide lamp defined in claim 1; and a lighting circuit which turns on the metal halide lamp.

According to the present invention, there is provided a headlight comprising: a headlight main body; a metal halide lamp which is arranged in the headlight main body and defined in claim 1; and a lighting circuit which turns on the metal halide lamp.

Effect of the Invention

According to the present invention, when the ratio Vo/VI is configured to fall within a predetermined range, light flux rising immediately after starting is improved, and occurrence of flickering of light emission in a life duration can be effectively suppressed, thereby providing a mercury-free metal halide lamp which is practical and suitable for a headlight, a metal halide lamp lighting device, and a headlight.

Brief Description of the Drawings

FIG. 1 is a front view showing an entire embodiment for carrying out-the present invention as a metal halide lamp for an automobile headlight.
FIG. 2 is a graph showing a relationship between a ratio Vo/VI and an incidence rate of flickering of light emission immediately after starting.
FIG. 3 is a circuit diagram showing an embodiment for carrying out a metal halide lamp lighting device according to the present invention.
FIG. 4 is a conceptual view showing an automobile headlight as an embodiment for carrying out a headlight according to the present invention.

Explanations of Letters and Numerals

1      translucent air-tight container
1a     enclosure portion
1a1    sealing portion
1a2    sealing tube
1b     electrode
1c     inner space
2      sealing metal foil
3A     external lead line
3B     external lead lines
IT     arc tube

Best Mode for Carrying out the Invention

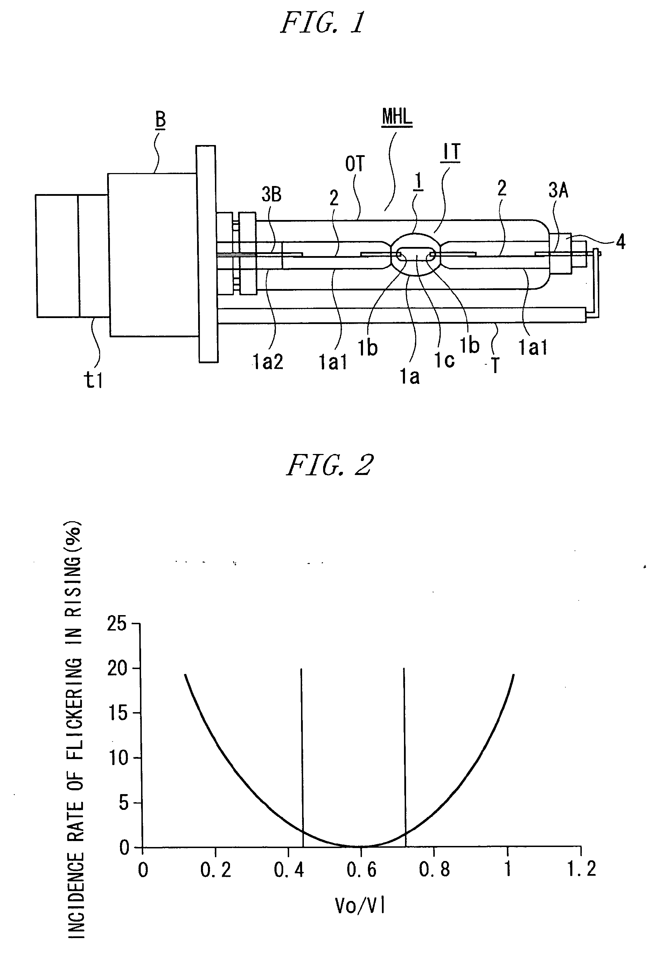

An embodiment for carrying out the present invention will now be described hereinafter with reference to the accompanying drawings.
A metal halide lamp MHL for an automobile headlight in one embodiment for carrying out the present invention shown in FIG. 1 is provided with an arc tube IT, an insulating tube T, an outer tube OT and a mouth ring B.
[Arc Tube IT] The arc tube IT is provided with a translucent air-tight container 1, a pair of electrodes 1b and 1b, a pair of external lead lines 3A and 3B and a discharging medium.
(Translucent Air-tight Container 1) The translucent air-tight container 1 is fire-resistant and translucent, and is provided with an enclosure portion 1a which forms an inner space 1c whose inner volume is not greater than 0.1 cc. In case of a headlight, the inner volume is preferably not greater than 0.05 cc. The inner space 1c has a substantially columnar shape. On the other hand, an outer surface of the enclosure portion 1a of the translucent air-tight container 1 forms a rotating quadric surface shape such as an elliptic spherical shape or a gentle spindle-like shape. Further, the enclosure portion 1a has a large wall thickness as a whole, the wall thickness is maximum at a central part in the tube-axis direction, and it is gradually reduced toward both ends. As a result, heat transmission of the translucent air-tight container 1 is improved, and an increase in temperature of a discharging medium which has adhered to the bottom surface and the side inner surface of the inner space 1c is hastened, thus effectively accelerating rising of a light flux.
Furthermore, the phrase that the translucent air-tight container is "fire-resistant and translucent" means that a light leading portion which is a part from which light is to be led to at least the outside of the enclosure portion 1a has translucency and has at least heat-resisting properties to sufficiently resist a regular operating temperature of the metal halide lamp MHL. Therefore, the translucent air-tight container 1 may be formed of any material as long as it is a material having fire-resisting properties and its necessary light leading portion can lead to the outside visible light in a desired wavelength band generated due to discharging. For example, the translucent air-tight container 1 can be formed of translucent ceramics or quartz glass. It is to be noted that quartz glass having a high linear transmission factor is generally used in case of the metal halide lamp for a headlight. Moreover, in a case where the translucent air-tight container 1 is formed of quartz glass, a transparent film having halogen-resisting properties or halide-resisting properties can be formed on the inner surface of the enclosure portion 1a of the translucent air-tight container 1 or the inner surface of the translucent air-tight container 1 can be modified as required.
When the translucent air-tight container 1 is formed of quartz glass, a pair of sealing portions 1a1 and 1a1 can be formed at both ends of the enclosure portion 1a in the tube-axis direction. The pair of sealing portions 1a1 and 1a1 are means for sealing the enclosure portion 1a, having shaft portions of later-described electrodes 1b embedded therein, and contributing to air-tight introduction of a current from a non-illustrated lighting circuit into the electrodes 1b, and they are integrally extended from both ends of the enclosure portion 1a. Furthermore, in order to seal and attach electrodes 1b and air-tightly introducing a current to the electrodes 1b from the lighting circuit, appropriate air-tight sealing/conducting means (preferably a sealing metal foil 2) is air-tightly embedded.
It is to be noted that the sealing metal foil 2 is means which is air-tightly embedded in each sealing portion 1a1 and functions as a current conductor in cooperation with the sealing portion 1a1 maintaining air tightness in the enclosure portion 1a of the translucent air-tight container 1, and it is preferable to use a foil of molybdenum (Mo), a rhenium-tungsten alloy (W-Re) or the like as a material when the translucent air-tight container 1 is formed of quartz glass. Molybdenum is oxidized when its temperature reaches approximately 350°C, and hence this metal foil is embedded so that a temperature at end portions on the outer side is lowered.

Although the method of embedding the sealing metal foil 2 in each sealing portion 1a1 is not restricted in particular, a reduced-pressure sealing method, a pinch sealing method or the like can be solely used or a combination of these method can be adopted. In case of a metal halide lamp used for a headlight which has a small shape with an inner volume of 0.1 cc or below and which is charged with a rare gas such as xenon (Xe) at a room temperature with a barometric pressure of 5 or above, the latter case is preferable.

Further, in FIG. 1, after forming the left sealing portion 1a1, a sealing tube 1a2 is integrally extended from an outer end portion of the sealing portion 1a1 to be led into a later-described mouth ring B without being cut off.

(Pair of Electrodes 1b and 1b) The pair of electrodes 1b and 1b are enclosed and separated to face each other in both ends of the enclosure portion 1a of the translucent air-tight container 1. These electrodes are arranged to be separated at both ends of the inner space 1c in such a manner that the inner volume of the inner space 1c of the metal halide lamp MHL becomes 0.1 cc.

Moreover, it is good enough for a diameter of a shaft portion of each of the pair of electrodes 1b and 1b to be generally set to an appropriate value within a range of 0.25 to 0.5 mm, or preferably 0.25 to 0.35 mm.

Moreover, each of the pair of electrodes 1b and 1b has a refractory metal shaft portion formed of, e.g., tungsten (W), doped tungsten, rhenium (Re), a tungsten-rhenium alloy (W-Re) or the like, a proximal end of each shaft portion is, e.g., welded to each sealing metal foil 2 to be embedded in the sealing portion 1a1, an intermediate part of the shaft portion is gently supported by the sealing portion 1a1 of the translucent air-tight container 1, and distal ends of the shaft portions are separated to face each other and arranged at both ends of the inner space 1c in such a manner that these ends face the inner space 1c of the translucent air-tight container 1.

Moreover, in a case where the metal halide lamp MHL is a headlight, when the shaft portion of each of the pair of electrodes 1b and 1b is extended to the distal end without increasing its diameter and a shape of the distal end is formed into a truncated conical shape, a semispherical shape or a semielliptic shape, a starting point of a discharging arc can be readily stabilized. Additionally, when a small projection is formed at the distal end, an effect can be synergistically increased. It is to be noted that, although not shown, the distal end of the electrode 1b is formed into a semispherical shape having a curvature which is 1/2 of a diameter of the electrode shaft in this embodiment.

However, if needed, a part of the electrode 1b in the vicinity of the distal end can be also formed into, e.g., a substantially spherical shape or an elliptic shape having a diameter larger than that of the shaft portion. That is, since the number of times of flashing of the lamp is extremely increased and a larger current than that in a steady mode is flowed at the time of start, when a diameter of the entire electrode 1b is increased in accordance with this configuration, a constituent of the translucent air-tight container 1 which is in contact with the electrode shaft receives heat stress every time flashing is performed, and a crack is apt to occur. Thus, forming a large-diameter portion in the electrode 1b in the vicinity of the distal end allows the electrode 1b to cope with flashing, but a crack is hardly produced since a diameter of the shaft portion is not increased.

Further, the electrode 1b may be configured to operate with either an alternating current or a direct current. When an alternating current is used for operation, the pair of electrodes 1b has the same configuration. When a direct current is used for operation, since a temperature is generally precipitously increased in an anode, forming a large-diameter portion in the vicinity of a distal end can enlarge a discharging area and cope with frequent flashing. On the other hand, a large-diameter portion does not have to be formed in a cathode.

(Pair of External Lead Lines 3A and 3B) A distal end of each of the pair of external lead lines 3A and 3B is welded on an opposite side of the other end of the sealing metal foil 2 in the sealing portion 1a1 at each of both ends of the translucent air-tight container 1, and a proximal end side is led to the outside. In FIG. 1, the external lead line 3A led to the right-hand side from the arc tube IT is folded back at an intermediate portion along a later-described outer tube OT, led into a later-described mouth ring B and connected to one of non-illustrated mouth ring terminals t1. In FIG. 1, the external lead line B led to the left-hand side from the arc tube IT is extended along the tube axis in the sealing tube 1a2, led into the mount ring B and connected with the other one (not shown) of the mouth ring terminals.

(Discharging Medium) The discharging medium contains a metal halogen compounds and a rare gas, but intrinsically does not contain mercury.

The metal halogen compounds include a plurality of types of metal halogen compounds selected from a group consisting of scandium (Sc), sodium (Na), indium (In), zinc (Zn) and a rare-earth metal. However, the discharging medium is not restricted to a configuration consisting of metal halogen compounds belonging to the above-described group alone, and it is allowed to supplementarily contain metal halogen compounds other than those in the group. For example, adding a halogen compound of thallium (Tl) as a main light-emitting material can further improve a luminous efficiency.

Further, metal halogen compounds for lamp voltage formation in the following group can be added in addition to zinc (Zn). That is, a lamp voltage can be adjusted to a desired condition by adding one or more types of metal halogen compounds selected from a group consisting of magnesium (Mg), cobalt (C), chrome (Cr), manganese (Mn), antimony (Sb), rhenium (Re), gallium (Ga), tin (Sn), iron (Fe), aluminum (Al), titanium (Ti), zirconium (Zr) and hafnium (Hf). Each of all metals belonging to the above-described group is a metal which does not emit light in a visible band because of a high vapor pressure or a metal which relatively rarely produces luminescence, i.e., a metal which is not expected as a luminescent metal which earns a light flux but is suitable to mainly form a lamp voltage.

The rare gas functions as a starting gas and a buffer gas, and one or a plurality of types of rare gases, e.g., argon (Ar), krypton (Kr) and xenon (Xe) can be used. Further, as the metal halide lamp for an automobile headlight, when xenon is enclosed with a barometric pressure of 5 or above, or preferably in a barometric pressure range of 7 to 18, or more preferably in a barometric pressure range of 9 to 15, or when it is enclosed in such a manner that a pressure in the inner space has a barometric pressure value of 50 or above at the time of lighting, white light emission of Xe can be contributed as a light flux at the timing of rising if a vapor pressure of the luminescent metal is low immediately after starting.

(Mercury) In the present invention, a phrase "does not intrinsically contain mercury" means that not only mercury (Hg) is not enclosed at all but also existence of mercury which is less than 2 mg, or preferably 1 mg or below per cc of the inner volume of the air-tight container is allowed.

However, enclosing no mercury at all is environmentally desirable. In a case where a lamp voltage of the discharging lamp is increased to a necessary value by mercury vapor like a prior art, it can be said that an amount of mercury is substantially small since 20 to 40 mg is enclosed per $cm^3$ of the inner volume of the air-tight container or 50 mg or more is enclosed in some cases in a short arc shape in the prior art.

(Type of Halogen) As a type of halogen constituting halogen compounds, iodine is optimum in halogen in regard to responsiveness, and at least the above-described major luminescent metals are mainly enclosed as iodides. However, if needed, it is possible to concomitantly use different halogen compounds like iodides or bromides.

[Insulating Tube T] The insulating tube T is formed of ceramics, and the insulating tube T covers the external lead line 3A.

[Outer Tube OT] The outer tube OT is formed of quartz glass, high-silicate glass or the like, and it is means for accommodating at least a primary part of the arc tube IT. Moreover, it blocks off ultraviolet rays radiated from the arc tube IT to the outside, mechanically protects, prevents fingerprints or fat of humans from being a factor of devitrification when the translucent air-tight container 1 is touched by a hand, or keeps the heat in the translucent air-tight container 1.

Additionally, the outer tube OT may be air-tightly sealed with respect to outside air in accordance with each purpose, or air or an inert gas whose pressure has been reduced to be substantially equal to that of outside air may be enclosed in this tube. Further, if needed, the outer tube may communicate with outside air.

Furthermore, a light shielding film may be arranged on an outer surface or an inner surface of the outer tube OT.

Moreover, in the illustrated embodiment, when forming the outer tube OT, the outer tube OT can be configured to be supported by the translucent air-tight container 1 by glass-depositing both ends thereof to the sealing portions extending from both ends of the translucent air-tight container 1 in the tube-axis direction. The outer tube OT has the ultraviolet protection performance and accommodates the arc tube IT therein, and each of diameter reduced portions 4 at both ends thereof is glass-deposited to the sealing portion 1a1 of the discharging container IT. However, the inside is not airproofed but communicates with outside air.

[Mouth Ring B] The mouth ring B is means functioning to connect the metal halide lamp HML with a non-illustrated lighting circuit and mechanically support the same, it is standardized as an automobile headlight in the illustrated conformation and configured to erectly support the arc tube IT and the outer tube OT along the central axis and to be detachably disposed on a rear surface of the automobile headlight.

[Average Lamp Voltage Vo]

A period of 0.3 to 1.2 seconds after starting is a period in which a lamp voltage is low and a lamp current is increased to perform constant power lighting, and hence a negative effect is brought with respect to the metal halide lamp.

However, according to studies by the present inventor, it was found that appropriately setting a lamp voltage in this period can suppress flickering of light emission. Additionally, since a lamp voltage in this period varies with time, observing this voltage as an average lamp voltage Vo is good. The average lamp voltage Vo can be obtained by integrating a changing lamp voltage with respect to a time. In reality, the average lamp voltage Vo can be readily obtained by operating an oscilloscope.

The average lamp voltage Vo in this period immediately after starting is mainly affected by an inter-electrode distance which is set between the distal ends of the pair of electrodes 1b and 1b, a charged pressure of a rare gas with which the translucent air-tight container 1 is charged, a shape of the-inner space 1c of the translucent air-tight container 1 and others. The average voltage Vo is heightened when the inter-electrode distance is increased, but a central value of this voltage is set to 4.2 mm based on standards in case of the metal halide lamp MHL for a headlight.

The average voltage Vo is heightened when the charged pressure of the rare gas is increased, and setting xenon (Xe) to fall within a barometric pressure range of 7 to 18 is good in case of the metal halide lamp for a headlight, for example. Further, in regard to the shape of the inner space 1c of the translucent air-tight container 1, reducing curves as much as possible can reduce the average lamp voltage Vo.

On the other hand, a lamp voltage Vl in a stable state is greatly affected by types, a compounding ratio and a charged amount of metal halogen compounds of the discharging medium which is enclosed in the inner space 1c of the translucent air-tight container 1 as well as an inter-electrode distance formed between the distal ends of the pair of electrodes 1b and 1b, a charged pressure of the rare gas with which the translucent air-tight container 1 is charged, a shape of, especially, the inner space 1c of the translucent air-tight container 1 and others.

Therefore, appropriately selecting each of the affecting factors can set a ratio Vo/Vl to fall within a predetermined range.

[Functions of Present Invention] If the ratio Vo/Vl falls within a range satisfying the above-described expression, a lamp current flowing immediately after starting has a value in an appropriate range in case of constant power lighting, thereby improving rising of a light flux immediately after starting.

Therefore, in the metal halide lamp MHL for a headlight, rising of a light flux after four seconds from starting can be set to 80% or above of a rated light flux. Further, flickering of light emission can be effectively suppressed also in a life duration, thereby obtaining stable lighting. Furthermore, since a lamp current has a value in an appropriate range, a load on the lighting circuit and the metal halide lamp MHL can be reduced, and hence a life duration according to a design can be obtained.

A description will now be given as to an example where the ratio Vo/Vl is less than 0.45. That is, in this case, a state where the average lamp voltage Vo is low and a state where the lamp voltage Vl is high can be theoretically considered.

However, since a certain level of an allowable range (approximately 35 to 55 V in case of a lamp whose rated lamp power is 35 W) of the lamp voltage Vl practically exists, a consideration will be given in this range. An antecedent basis of the range of the lamp voltage Vl will be first explained. When the lamp voltage Vl is considerably low (less than approximately 35 V in case of a lamp whose rated lamp power is 35 W), a lamp current is extremely increased and a ballast (a current-limiting inductor) in the lighting circuit must be designed to withstand the large current, whereby a problem of an increase in size and cost becomes prominent.

Moreover, a cross section of each current introducing member (the electrode, the sealing metal foil, an external introducing body and others) which withstands a large lamp current in a stable state is increased, and hence there occurs a problem that the sealing portion is increased in size to realize a large dimension of the lamp. On the contrary, when the lamp voltage is high (exceeding 55 V in case of a lamp whose rated lamp power is 35 W), the following countermeasures for increasing the voltage can be considered, but they respectively have problems.

(1) When a charged amount of metal halogen compounds is increased to heighten a vapor pressure, a light emission efficiency is lowered.

(2) When the translucent air-tight container 1 is reduced in size, a temperature of the translucent air-tight container 1 is increased to shorten a life duration.

(3) When a rare gas pressure is increased, leak or rupture of the translucent air-tight container 1 is apt occur.

Meanwhile, in a case where the ratio Vo/Vl is less than 0.45, the average lamp voltage Vo becomes not greater than 15 V at minimum when the lamp voltage falls within the above-described range. When the average lamp voltage Vo becomes not greater than 15 V in this manner, a lamp current which is not smaller than approximately 5 A flows at the time of a large power in starting (it is assured to be 75 W which is double a power in a stable state) in rated power lighting generally adopted in the metal halide lamp MHL for a headlight, and this lamp current thereby becomes six-fold or above of a current which is approximately 0.8 A in the stable state. This is a value which is at least 60% higher than 2.9 A when the average lamp voltage Vo is 26 V.

As a result, an electrode temperature is increased, and considerable electrode wear occurs, which brings flickering of light emission. Further, when the considerable electrode wear occurs, a life duration of the metal halide lamp is shortened.

A description will now be given as to an example where the ratio Vo/Vl exceeds 0.72. In this case, based on the same concept as that when this ratio dips from a.lower limit value, the average lamp voltage Vo exceeds a maximum value 40 V. When the average lamp voltage Vo exceeds 40 V, a lamp current is reduced to be smaller than 1.9 A at the time of a large power (it is assumed to 75 W which is twofold or more of that in a stable state) at the time of starting. The lamp current at this time is at least 35% smaller than 2.9 A which is a value when the average lamp voltage Vo is 26 V.

As a result, an electrode temperature immediately after starting becomes relatively smaller than that when the lamp voltage Vl is 26 V. Therefore, electron emission characteristics of each electrode immediately after starting are reduced, thereby producing flickering of light emission. Although its reason is not clear, it has been revealed from a test that flickering of light emission is apt to occur even though the electrode temperature is high immediately after starting as compared with that in the stable state. It can be understood from this fact that a reduction in the electrode temperature immediately after starting readily generates flickering of light emission.

Moreover, besides the requirement of the ratio Vo/Vl, the present invention specifies as respective requirements that (1) an inter-electrode distance is not greater than 5 mm, (2) metal halogen compounds of the discharging medium are a plurality of metal halogen compounds selected from a group consisting of scandium (Sc), sodium (Na), indium (In), zinc (Zn) and a rare-earth metal, (3) the discharging medium does not intrinsically contain mercury and (4) a lamp power per unit inner surface area of the air-tight container, i.e., a tube wall load is not smaller than 60 $(W/cm^2)$, and its reasons are as follows. That is,

(1) the metal halide lamp having an inter-electrode distance which is not greater than 5 mm is used for an application such as a headlight or a projection where excellent rising of a light flux immediately after starting is required or preferable, and hence the present invention is effective. It is to be noted that, as the metal halide lamp for an automobile headlight, an inter-electrode distance 4.2 mm is standardized, and 2 mm or below is preferable for a projection.

(2) Since the metal halide compounds of the discharging medium are a plurality of types of metal halogen compounds selected from the above-described group, the metal halide lamp compatible with various applications can be obtained. In the metals in the group, scandium (Sc) and sodium (Na) highly efficiently emit white-color-based light in accordance with a combination of these materials in particular, they can be adopted as major visible-light-emitting materials.

Indium (In) and zinc (Zn) emit blue-color-based light, whereby they can be adopted for adjusting chromaticity. Additionally, since a vapor pressure of zinc is relatively high, zinc can be adopted for formation of a lamp voltage.

The rare-earth metal can be mainly adopted for emission of visible light and adjustment of chromaticity. It is to be noted that the rare-earth metal has some functions for formation of a lamp voltage.

Therefore, appropriately selecting a plurality of metal halogen compounds belonging to the above-described group can obtain various kinds of small metal halide lamps having a high optical output for a headlight, a projection and others.

(3) In regard to the fact that the discharging medium intrinsically does not contain mercury, containing no mercury (Hg) at all is preferable for a reduction of environmental load substances, but containing mercury to the extent that functions and effects of the present invention are not essentially affected, in other words, containing mercury in an amount equal to that of impurities is allowed.

(4) The tube wall load is not smaller than 60 $(W/cm^2)$ in order to clarify that the present invention is effective with respect to various kinds of small metal halide lamps having a high optical output for a headlight, a projection and others.

An embodiment as well as Comparative Example 1 and Comparative Example 2 will now be described. It is to be noted that Comparative Example 1 corresponds to a commercially available automobile headlight metal halide lamp, and Comparative Example 2 corresponds to an automobile headlight mercury-free lamp which does not comprise the configuration of the present invention.
Embodiment

Translucent air-tight container 1: an inner volume 0.020 cc of an inner space, an internal diameter 2.6 mm, an enclosure portion length 7.0 mm, an enclosure portion external diameter 6.0 mm
Inter-electrode distance: 4.2 mm
Discharging medium: a metal halogen compound $SCl_3$-NaI-$ZnI_2$-InI-CsI, a total 0.5 mg, a rare gas Xe 10 atm
Input power immediately after starting: 75 W
Input current immediately after starting: 3.0 A
Average lamp voltage Vo immediately after starting: 25 V Lamp voltage in a stable state: 42 V
Ratio Vo/Vl: 0.60
Lamp current in a stable state: 0.8 A
Lamp power in a stable state: 35 W
Light flux after four seconds from starting: 1400 lm

[Comparative Example 1]

Translucent air-tight container 1: an inner volume 0.020 cc of an inner space, an internal diameter 2.6 mm, an enclosure portion length 7.0 mm, an enclosure portion external diameter 6.0 mm
Inter-electrode distance: 4.2 mm
Discharging medium: a metal halogen compound $ScI_3$-NaI-Hg, a rare gas Xe approximately 4 atm
Input power immediately after starting: 65 W
Input current immediately after starting: 3.0 A
Average lamp voltage immediately after starting: 22 V
Lamp voltage in a stable state: 90 V
Ratio Vo/Vl: 0.24
Lamp current in a stable state: 0.4 A
Lamp power in a stable state: 35 W
Light flux after four seconds from starting: 2900 lm

[Comparative Example 2]

Translucent air-tight container 1: an inner volume 0.045 cc of an inner space, an internal diameter 4.0 mm, an enclosure portion length 7.0 mm, an enclosure portion external diameter 6.0 mm

Inter-electrode distance: 4.2 mm

Discharging medium: a metal halogen compound $SCl_3$-$NaI$-$ZnI_2$, a total 1.3 mg, a rare gas Xe 5 atm

Input power immediately after starting: 80 W

Input current immediately after starting: 4.0 A

Average lamp voltage immediately after starting: 19 V Lamp voltage in a stable state: 50 V

Ratio Vo/Vl: 0.38

Lamp current in a stable state: 0.7 A

Lamp power in a stable state: 35 W

Light flux after four seconds from starting: 1200 1m

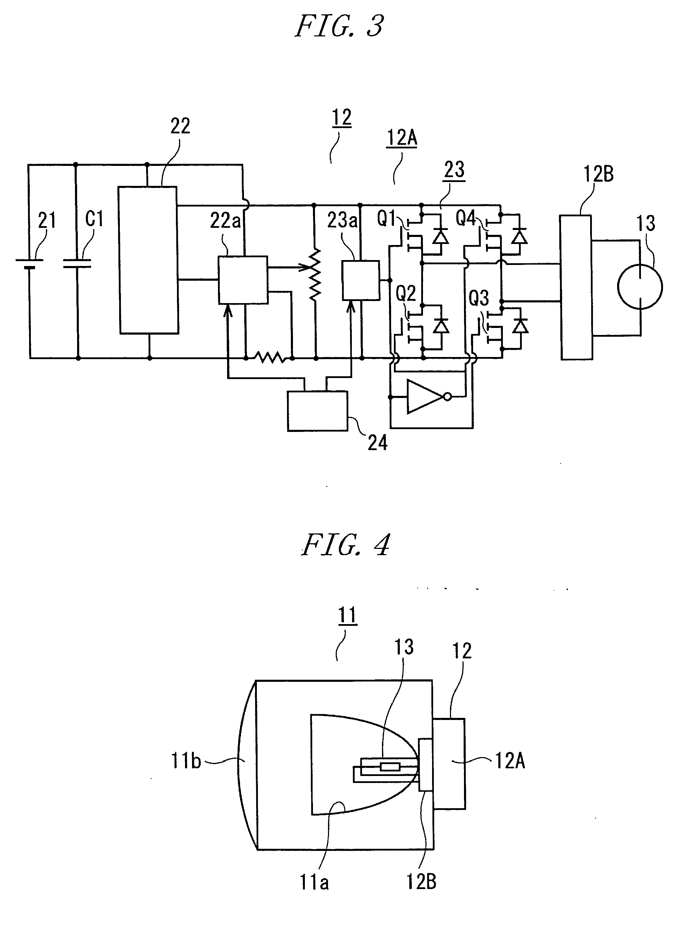

A description will now be given as to a relationship between the ratio Vo/Vl and an incidence rate of flickering of light emission immediately after starting when the ratio Vo/Vl of the translucent air-tight container is varied in many ways in the embodiment with reference to FIG. 2. It is to be noted that a horizontal axis represents the ratio Vo/Vl and a vertical axis represents the incidence rate (%) of flickering in the drawing. It is to be noted that the incidence rate of flickering is obtained by a visual judgment.

As can be understood from the drawing, when the ratio Vo/Vl becomes less than 0.45 or exceeds 0.72, the incidence rate of flicking is precipitously increased for the above-described reason, and hence the relationship is disapproved.

FIG. 3 is a circuit diagram showing one conformation for embodying a metal halide lamp lighting device according to the present invention. That is, the metal halide lamp lighting device is provided with a main lighting circuit 12A and a starter 12B. The main lighting circuit 12A is configured as follows, and can be attached to a later-described headlight main body 11.

A metal halide lamp 14 is formed of the metal halide lamp according to the present invention shown in FIG. 1.

The main lighting circuit 12A is constituted of a direct-current power supply 21, a boosting chopper 22, an inverter 23 and a control circuit 24, and turns on the metal halide lamp 13.

The direct-current power supply 21 is formed of a battery power supply, a rectifying direct-current power supply or the like, and has a smoothing capacitor C1 connected between direct-current outputs.

The boosting chopper 22 boosts a direct-current voltage fed from the direct-current power supply 21 to a necessary voltage, smoothens it and supplies an input voltage to the later-described inverter 23. It is to be noted that reference character 22a denotes a driving circuit which drives a switching element of the boosting chopper 22.

The inverter 23 is formed of a full-bridge type inverter. Further, it bridge-connects four switching elements Q1 to Q4, and alternately switches the pair of switching elements Q1 and Q3 constituting opposed two sides and the pair of switching elements Q2 and Q4 constituting the other opposed two sides, thereby outputting an alternating voltage having a rectangular wave to a space between output ends of these switching elements. It is to be noted that reference character 23a designates a driving circuit which drives the respective switching elements Q1 to Q4 of the inverter 23.

The control circuit 24 controls the boosting chopper 22 and the inverter 23 to necessary states. For example, when the metal halide lamp 13 is in a cooled state, the control circuit 24 controls in such a manner that the metal halide lamp 13 is turned on with a power which is approximately twofold or more, e.g., approximately 2.3-fold of a rated lamp power for several seconds immediately after starting and the power is then gradually reduced to a rated lamp power in a stable lighting mode.

The starter 12B outputs a high-voltage pulse when starting the metal halide lamp 13, and applies this pulse to the metal halide lamp 13 in order to instantaneously start the lamp.

Then, the metal halide lamp lighting device starts and stably turns on the metal halide lamp 13. Furthermore, as the metal halide lamp lighting device for an automobile headlight, this device starts the metal halide lamp 13, inputs a power which is twofold or more of a rated lamp power for several seconds immediately after start of lighting, then reduces the lamp power at a fixed rate when halogen compounds are precipitously vaporized, and subsequently controls and turns on the metal halide lamp while gradually decreasing the reduction rate from a large value to the rated lamp power so that the control shifts to stable lighting.

FIG. 4 shows an automobile headlight as one conformation for carrying out a headlight according to the present invention. In the drawing, reference numeral 11 denotes a headlight main body; 12, a lighting circuit; and 13, a metal halide lamp.

In the present invention, the headlight main body 11 means a remaining part of a headlight excluding the metal halide lamp 13 and the lighting circuit 12. Additionally, the headlight main body 11 has a container shape, and includes a reflection mirror 11a, a lens 11b on a front surface thereof, a non-illustrated lamp socket and others.

**Claims**

1. A metal halide lamp comprising:

    a translucent air-tight container having an inner volume which is not greater than 0.1 cc;
    a pair of electrodes sealed facing each other with an inter-electrode distance which is not greater than 5 mm in the translucent air-tight container;

and

a discharging medium containing a plurality of metal halogen compounds selected from a group of scandium (Sc), sodium (Na), indium (In), zinc (Zn) and a rare-earth metal and a rare gas but intrinsically not containing mercury (Hg),

wherein a tube wall load is not smaller than 60 W/cm$^2$, and a ratio Vo/Vl satisfies the following expression:

$$0.45 \leq \text{Vo/Vl} \leq 0.72$$

where Vo is an average lamp voltage for 0.3 to 2 seconds after starting, and Vl is an average lamp voltage in a stable state.

2. A metal halide lamp lighting device comprising:

a metal halide lamp according to claim 1; and
a lighting circuit which turns on the metal halide lamp.

3. A headlight comprising:

a headlight main body;
a metal halide lamp according to claim 1 arranged in the headlight main body; and
a lighting circuit which turns on the metal halide lamp.

## FIG. 1

## FIG. 2

INCIDENCE RATE OF FLICKERING IN RISING (%)

Vo/Vl

## FIG. 3

## FIG. 4

<table>
<tr><td colspan="2"><strong>INTERNATIONAL SEARCH REPORT</strong></td><td>International application No.<br>PCT/JP2005/011846</td></tr>
</table>

| | |
|---|---|
| A. CLASSIFICATION OF SUBJECT MATTER<br>   Int.Cl$^7$ H01J61/88, F21S8/10 | |

According to International Patent Classification (IPC) or to both national classification and IPC

| |
|---|
| B. FIELDS SEARCHED |
| Minimum documentation searched (classification system followed by classification symbols)<br>   Int.Cl$^7$ H01J61/88, F21S8/10 |

Documentation searched other than minimum documentation to the extent that such documents are included in the fields searched
   Jitsuyo Shinan Koho      1922-1996   Jitsuyo Shinan Toroku Koho   1996-2005
   Kokai Jitsuyo Shinan Koho  1971-2005   Toroku Jitsuyo Shinan Koho   1994-2005

Electronic data base consulted during the international search (name of data base and, where practicable, search terms used)

| | |
|---|---|
| C. DOCUMENTS CONSIDERED TO BE RELEVANT | |

| Category* | Citation of document, with indication, where appropriate, of the relevant passages | Relevant to claim No. |
|---|---|---|
| A | WO 2003/030210 A1 (HARISON TOSHIBA LIGHTING CORP.),<br>10 April, 2003 (10.04.03),<br>Full text; all drawings<br>& EP 1432011 A1     & US 2005/0040768 A1 | 1-3 |
| A | JP 2003-288859 A (Toshiba Lighting & Technology Corp.),<br>10 October, 2003 (10.10.03),<br>Full text; all drawings<br>& EP 1349197 A2     & US 2003/0222584 A1 | 1-3 |
| A | JP 57-5257 A (Japan Storage Battery Co., Ltd.),<br>12 January, 1982 (12.01.82),<br>Full text; all drawings<br>(Family: none) | 1-3 |

| ☐ Further documents are listed in the continuation of Box C. | ☐ See patent family annex. |
|---|---|

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>   12 October, 2005 (12.10.05) | Date of mailing of the international search report<br>   25 October, 2005 (25.10.05) |
|---|---|
| Name and mailing address of the ISA/<br>   Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11238488 A
- JP 2001006610 A
- JP 2001313001 A
- JP 2003187742 A

**Non-patent literature cited in the description**

- Automobile Headlight HID Light Source. *Japan Electric Lamp Manufactures Association Standards JEL 215*